(19) Europäisches Patentamt / European Patent Office / Office européen des brevets

(11) **EP 2 748 966 B1**

(12) **EUROPEAN PATENT SPECIFICATION**

(45) Date of publication and mention of the grant of the patent:
**09.08.2017 Bulletin 2017/32**

(21) Application number: **11785138.6**

(22) Date of filing: **19.09.2011**

(51) Int Cl.:
*H04L 9/12* (2006.01)          *H04L 9/08* (2006.01)

(86) International application number:
**PCT/IT2011/000326**

(87) International publication number:
**WO 2013/042143 (28.03.2013 Gazette 2013/13)**

(54) **MANAGEMENT OF SYNCHRONIZED SYMMETRIC KEYS FOR SECURING DATA EXCHANGED BY COMMUNICATION NODES**

VERWALTUNG VON SYNCHRONISIERTEN SYMMETRISCHEN SCHLÜSSELN ZUR SICHERUNG VON DATENAUSTAUSCH ÜBER KOMMUNIKATIONSKNOTEN

GESTION DE CLÉS SYMÉTRIQUES SYNCHRONISÉES PERMETTANT DE SÉCURISER DES DONNÉES ÉCHANGÉES PAR DES N UDS DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.07.2014 Bulletin 2014/27**

(73) Proprietor: **Telespazio S.p.A.**
**00156 Roma (IT)**

(72) Inventors:
• **VALLETTA, Damiano**
 **I-84049 Castel San Lorenzo (IT)**

• **SAITTO, Antonio**
 **I-00156 Roma (IT)**
• **BELLOFIORE, Paolo**
 **I-00157 Roma (IT)**

(74) Representative: **Boggio, Luigi et al**
 **Studio Torta S.p.A.**
 **Via Viotti, 9**
 **10121 Torino (IT)**

(56) References cited:
 **WO-A1-01/63832          WO-A2-01/91366**
 **US-A1- 2006 280 298     US-A1- 2009 319 769**

**Description**

## TECHNICAL FIELD OF THE INVENTION

The present invention relates to management of synchronized symmetric keys and use thereof for securing data exchanged by communication nodes. In particular, a specific aspect of the present invention concerns management of synchronized symmetric encryption/decryption keys and symmetric encryption/decryption based thereon.

## BACKGROUND ART

Currently, symmetric keys are widely used to secure data exchanged by communication nodes.

For example, in cryptography, symmetric-key algorithms use one and the same cryptographic key, named symmetric key, for both encryption and decryption, i.e., to transform plaintext into ciphertext and vice versa. A symmetric key has to be known by communication nodes exchanging data encrypted on the basis of said symmetric key in order to allow a correct decryption.

In many current communication systems using symmetric encryption/decryption to secure communications, symmetric keys are distributed a priori to communication nodes so as to minimize the risk that the distributed keys are eavesdropped. Anyway, said risk is never completely eliminated and, thence, if the distributed keys are eavesdropped by an unauthorized party, said unauthorized party is able to decrypt encrypted data exchanged by the authorized communication nodes.

Therefore, current communication systems distributing a priori symmetric keys to communication nodes are never completely secure.

Known systems and methods for cryptographic communications are disclosed in WO 01/63832 A1 and WO 01/91366 A2.

In particular, WO 01/63832 A1 discloses an apparatus and method for secure cryptographic communications between a sender and a receiver or multiple receivers, that includes first and second timing elements, and first and second key storage units containing multiple keys in a predetermined order for selection depending on respective key times, where the key times appear periodically according to the first and second timing elements, respectively. A data encryptor obtains a new key from the first key storage unit at each occurrence of the key time of the first key storage unit, and uses the key to encrypt input data. And, at least one data decryptor obtains a new key from the second key storage unit at each occurrence of the key time of the second key storage unit. Time synchronization of the participants' equipment provides the method of selecting compatible keys for the encryption and decryption process.

Moreover, WO 01/91366 A2 discloses an apparatus and method for generating pseudo-random cryptographic keys in a cryptographic communications system, whereby, given a common set of initializing configuration data, the pseudo-random cryptographic keys can be duplicatively generated by various independent pseudo-random key generators of the cryptographic communications system.

## OBJECT AND SUMMARY OF THE INVENTION

The objective of present invention is then to provide a methodology for managing symmetric keys which can alleviate at least in part the above cited drawbacks.

This objective is achieved by the present invention in that it relates to a method for securing/unsecuring data exchanged by communication nodes, a communication apparatus configured to implement said method, and a software program product for implementing said method, as defined in the appended claims.

## BRIEF DESCRIPTION OF THE DRAWINGS

For a better understanding of the present invention, preferred embodiments, which are intended purely by way of example and are not to be construed as limiting, will now be described with reference to the attached drawings (all not to scale), wherein:

- Figure 1 illustrates schematically a first key generation process according to a first preferred embodiment of the present invention;
- Figure 2 illustrates schematically a second key generation process according to a second preferred embodiment of the present invention;
- Figure 3 shows key hops according to an example embodiment of the present invention;
- Figure 4 shows a relation between a tick time of an internal clock of a communication apparatus and a key dwell time according to an example embodiment of the present invention;

- Figure 5 illustrates schematically an example of a functional architecture of a sending node according to a specific preferred embodiment of the present invention;
- Figure 6 shows an example sync time generation performed by the sending node of figure 5;
- Figure 7 shows an example of a key window used in reception according to said specific preferred embodiment of the present invention; and
- Figure 8 illustrates schematically an example of a functional architecture of a receiving node according to said specific preferred embodiment of the present invention.

## DETAILED DESCRIPTION OF PREFERRED EMBODIMENTS OF THE INVENTION

The following discussion is presented to enable a person skilled in the art to make and use the invention. Various modifications to the embodiments will be readily apparent to those skilled in the art, without departing from the scope of the present invention as claimed. Thus, the present invention is not intended to be limited to the embodiments shown, but is to be accorded the widest scope consistent with the principles and features disclosed herein and defined in the appended claims.

The present invention concerns local generation of synchronized symmetric keys and use thereof for securing data exchanged by communication nodes.

Some basic concepts of the present invention are independent of different application scenarios, while some characteristics are adapted to specific application scenarios. Therefore, in the following there will described at first general concepts of the present invention, and then specific characteristics tailored to different scenarios.

Some concepts of the present invention are applicable to all communication nodes involved in a secure communication, i.e., to sender(s) and receiver(s), and, thence, in the following description, said concepts will not be repeated, while specific functionalities implemented only by the sender(s) or by the receiver(s) will be highlighted.

A specific aspect of the present invention concerns local generation of synchronized symmetric encryption keys at both sides of a communication channel, specifically of a public, i.e., eavesdroppable, communication channel.

In particular, according to said specific aspect of the present invention, communication nodes encrypt and decrypt data mutually exchanged over a communication channel by using synchronized encryption/decryption keys extracted from one and the same sequence of keys, and by changing the used encryption/decryption key during transmission/reception. The key change can be planned on time or event basis and is synchronized between the communication nodes in order to guarantee a correct decryption. This concept presents an analogy with Frequency Hopping communication techniques according to which transmitter(s) and receiver(s) change frequency on a time basis, following a shared sequence of frequencies. In particular, in Frequency Hopping communication techniques the change between two consecutive frequencies in a given frequency sequence is called "frequency hop", and, analogously, in the following a similar name, namely "key hop", will be adopted to identify the change between two consecutive keys in a given key sequence.

In a more general perspective, the present invention allows communication nodes to generate same sequences of keys and to extract synchronized keys from said sequences. The extracted keys can be advantageously exploited to provide different security services like encryption/decryption, integrity check and authentication check, or can be used as an index for locating a single key in a given key sequence. In particular, keys extracted from each sequence can be used to provide a respective security service.

According to the present invention, key generation is performed independently by each communication node. No messages are exchanged by the communication nodes in order to agree about the key to be used. The only requirement for key generation is that used key generation functions create same keys for both the communications nodes in order to allow the receiving node(s) to correctly retrieve information.

Preferably, the local key generation is performed in two steps:

1. a generation or retrieval of one or more Ordered Sequence(s) of Numbers (OSN(s)); and
2. a generation of keys on the basis of the generated/retrieved OSN(s).

Said two-step key generation process allows to independently generate different keys for different security services on the basis of one and the same OSN. In particular, said two-step key generation process allows to generate different Ordered Sequences of Keys (OSKs) on the basis of one and the same OSN.

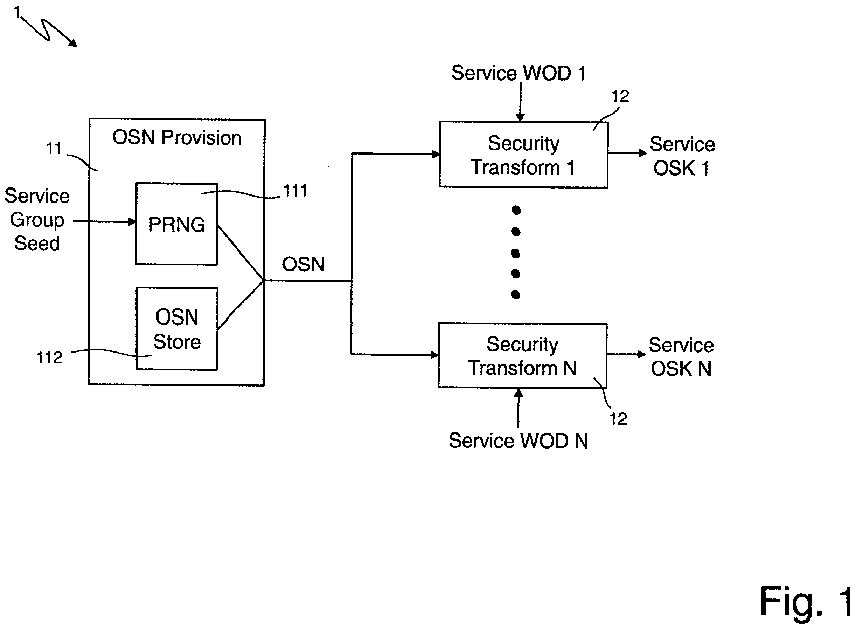

In this connection, figure 1 schematically illustrates a first key generation process for generating different OSKs on the basis of a single OSN according to a first preferred embodiment of the present invention.

In particular, figure 1 shows a functional block diagram of a key generation unit 1 configured to:

- provide an OSN (block 11) by generating it on the basis of a service group seed preferably operating as a Pseudo Random Number Generator (PRNG) (sub-block 111), or, alternatively, by retrieving it from stored OSNs (sub-block 112); and

• apply, for each of N security services (where N is an integer equal to, or higher than, one, i.e., $N \geq 1$) to be provided on the basis of a respective OSK, a respective security transform based on a respective service Word Of Day (WOD) to the generated/retrieved OSN so as to generate a respective service OSK (blocks 12).

In detail, as shown in figure 1, a different OSK is generated for each security service by applying a respective security transform on the single generated/retrieved OSN. Each security transform uses, as inputs, the single generated/retrieved OSN and a specific respective service WOD.

The aforesaid key generation allows the generation of OSKs that are identical for sender(s) and receiver(s) if said communication nodes are fed with identical OSN(s) and Service WOD(s).

Conveniently, the used security transforms are such that to ensure good statistical properties of ciphertext even with plaintext patterns applied as input, and to grant that it is not possible to make a prediction about the input OSN by observing the output OSKs.

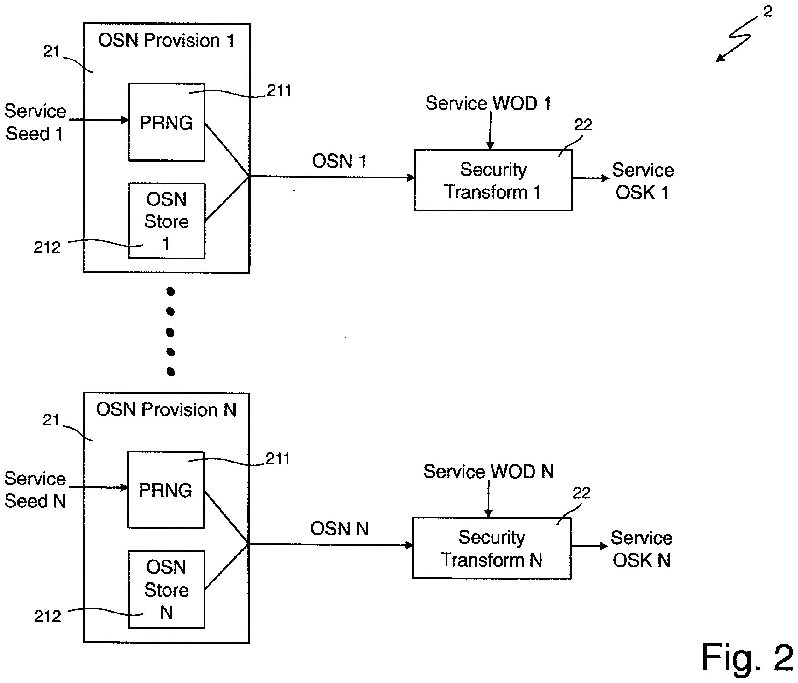

Instead, figure 2 schematically illustrates a second key generation process based on different OSNs according to a second preferred embodiment of the present invention.

In particular, figure 2 schematically illustrates a second key generation process for generating different OSKs each on the basis of a respective OSN.

In detail, figure 2 shows a functional block diagram of a key generation unit 2 configured, for each of N security services (with $N \geq 1$) to be provided on the basis of a respective OSK, to:

• provide a respective OSN (blocks 21) by generating it on the basis of a respective service seed preferably operating as a PRNG (sub-blocks 211), or, alternatively, by retrieving it from respective stored OSNs (sub-blocks 212); and

• apply a respective security transform based on a respective service WOD to the respective generated/retrieved OSN so as to generate a respective service OSK (blocks 22).

This second solution for generating service OSKs is computationally more complex than the first one previously described in connection with figure 1, but is preferable in some application scenarios, for example when some of the service OSKs have to be sent in plaintext over a public channel in order to be used as indexes that identify keys in other service OSKs.

An intermediate solution can be obtained by dividing security services in groups and by using a different service group seed for each security service group.

As previously described, two main options are available for the local generation of a OSN, specifically:

1. an OSN is generated by using a PRNG; or

2. an OSN is retrieved from an OSN store that contains pre-generated sequences of numbers and is identical for sender(s) and receiver(s).

Using the first option for the local generation of an OSN, all the elements of the OSN are dynamically created with a PRNG function starting from a seed, referred to as service group seed or service seed.

A PRNG function can be defined as a random number generation function that produces a sequence of values based on a seed and a current state. Given the same seed, a PRNG function will always produce the same sequence of values. This property ensures that the same OSN will be generated at both ends of a communication channel when starting from one and the same seed. A non-pseudo random number generator, such as a hardware random number generator, is not suitable for the present invention, as it would generate different OSNs at two sides of a communication channel.

When no polynomial time algorithm can distinguish the output of a PRNG and a true random sequence, the PNRG is said to be "cryptographically strong". Preferably, according to the present invention, a cryptographically strong PRNG is used because it does not make it possible to predict the generated sequence. Furthermore, having a large chunk of output from the PRNG does not help in predicting past or future values.

Moreover, in order to guarantee output unpredictability of the used cryptographically strong PRNG, said PRNG conveniently starts from an unpredictable seed, for example a seed generated using a non linear function.

Instead, using the second option for the local generation of an OSN, the OSN employed to generate service keys is retrieved from an OSN store; obviously, the OSN store(s) is/are identical for all the communication nodes.

The first option has the advantage to allow a communication of potentially unlimited duration because OSN elements are dynamically generated, while the second option is limited to the dimension of the OSN store. This advantage is somehow limited by the periodicity of the PRNG. In fact, after a fixed number of generation operations (typically very high), the PRNG produces again the same output sequence.

Patterns in a PRNG can introduce security risks. These risks can be conveniently avoided by using security transform(s) ensuring good statistical properties of ciphertext even with plaintext patterns applied as input.

Moreover, preferably, the PRNG cycle is longer than the needed length of the OSK. As a matter of fact, if a block cipher security transform operating in Electronic Code Book (ECB) mode is used to generate an OSK from an OSN, the generated OSK has the same cycle length of the PRNG. This issue can be conveniently avoided by using, as previously stated, security transform(s) ensuring good statistical properties of ciphertext even with plaintext patterns applied as input. For example block cipher security transforms operating in Cipher Block Chaining (CBC) mode can be advantageously used, since they have the property to conceal data patterns.

In the following, operation of the communication nodes, when acting as sending and receiving nodes, will be described, for the sake of description simplicity, in connection with a single security service applied to data exchanged by said communication nodes, while it is understood that concepts of the present invention described in the following with respect to a single security service are clearly applicable also to provide a plurality of security services.

As far as senders' operation is concerned, a sending node selects a service key from a generated service OSK using its local time synchronized to a common global reference time by means of a Local Accurate and Stable Time External Reference (LASTER). The LASTER can be conveniently acquired from an external source or from an internal source used by the sending node to mark transmitted data packets.

Each service key in a service OSK has a limited time of validity, in the following referred to as key dwell time T.

In particular, key dwell time T is the time spent using each service key extracted from a service OSK between two consecutive key hops.

In detail, key dwell time T is related to internal time units typically characterizing an internal time source, such as an internal clock, of the communication nodes, which internal clock normally limits time resolution by means of its frequency. Thus, the key dwell time T may be conveniently calculated as a multiple of a tick time of the internal clock, where the tick time is the inverse of the internal clock frequency.

In other words, using a mathematical formalism, there results that:

$$T = m \times tick\_time \, ,$$

where m is an integer equal to, or higher than, one (i.e., $m \geq 1$), and the tick time, as previously explained, is the inverse of the internal clock frequency, namely

$$tick\_time = \frac{1}{clock\_frequency} \, .$$

An index n=0,1,2,... can be used to identify consecutive key validity intervals. In particular, the generic key validity interval n corresponds to the key dwell time starting at $t\_0+nT$ and ending at $t\_0+(n+1)T$.

Starting time $t\_0$ can be conveniently chosen as the security service starting time referred to a global reference time expressed in Coordinated Universal Time (UTC).

All data frames that have to be transmitted in the key validity interval n are secured with a service key K[n] that is extracted from a service OSK generated for the considered security service, and that can be mathematically expressed as:

```
K[n]=GenK(n,WOD,seed),
```

where GenK denotes a key generation function for said considered security service, which key generation function GenK

- generates a service OSK for the considered security service on the basis of a service WOD associated with said considered security service and of a service group seed or a service seed associated with said considered security service, for example according to the first key generation process previously described in connection with figure 1, or according to the second key generation process previously described in connection with figure 2, or according to a key generation process intermediate between the first and second key generation processes; and
- extracts a service key K[n] from the generated service OSK on the basis of the key validity interval index n (that can be seen also as a key generation step index).

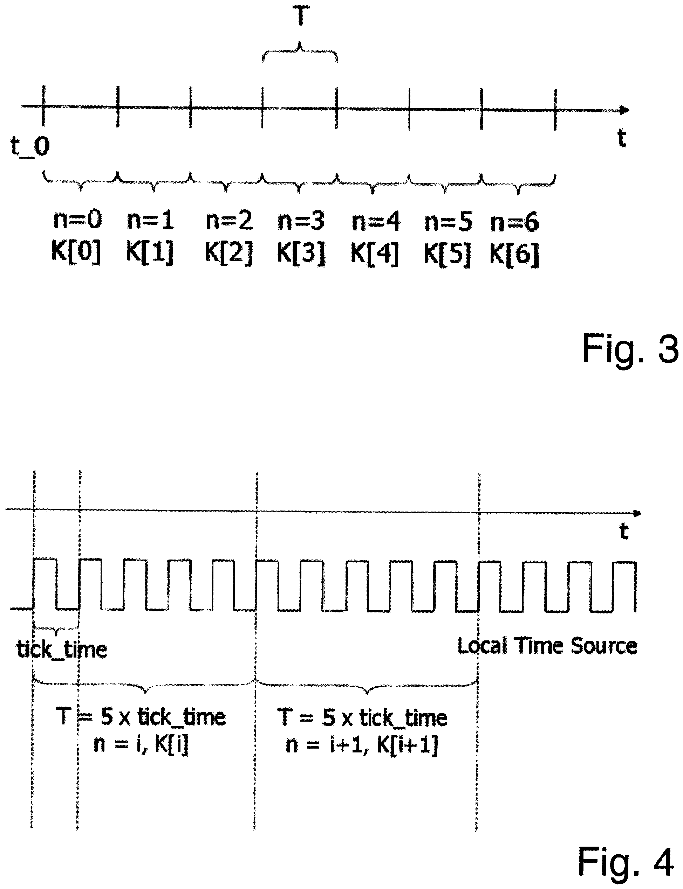

Figure 3 shows how the (security service) starting time $t\_0$, the key dwell time T and the key validity interval index n are related, and validity intervals for different service keys K[n], where n=0,1,2,3,4,5,6.

Figure 4 shows an example of relations among the tick time, the key dwell time T and the key validity interval index n, under the hypothesis that $T = 5 \times tick\_time$.

The key generation function GenK can conveniently generate the service OSK on the basis of fixed values of the service WOD and of the service (group) seed, and extract from the generated service OSK, as internal time goes on, a current service key K[n] on the basis of the current key validity interval index n.

Conveniently, the service (group) seed, the key dwell time T and the (security service) starting time t_0 can be exchanged in plaintext by the communication nodes before starting the secure data exchange, can be fixed values or can be kept secret but known by the two communication nodes, for example can be pre-shared secret values or can be exchanged by the communication nodes over a communication channel in a secure manner. Keeping the service (group) seed, the key dwell time T and the (security service) starting time t_0 secret, communication security is enhanced.

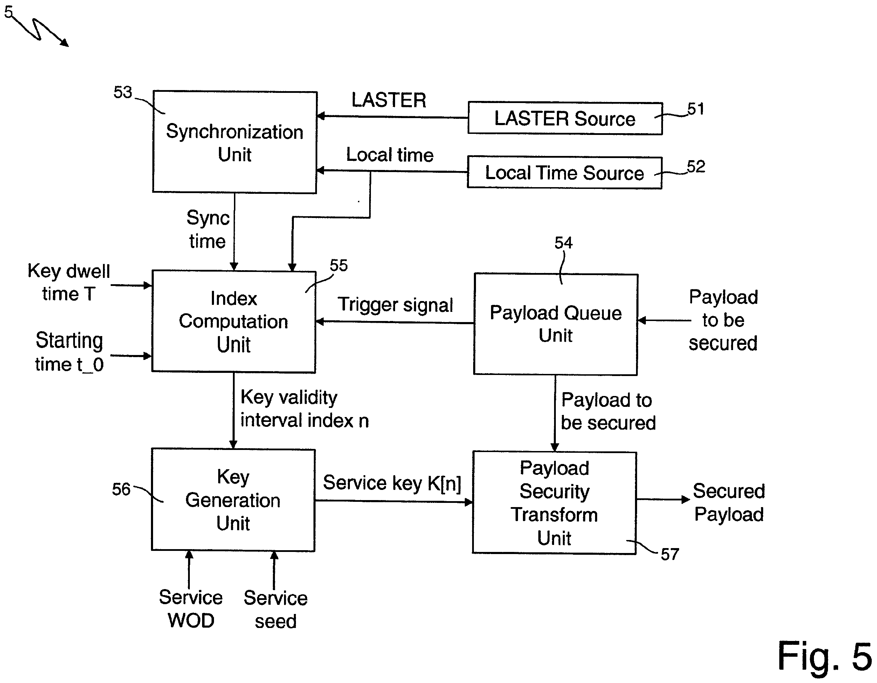

Figure 5 schematically illustrates an example of a functional architecture of a transmitting node designed to provide a specific security service, for example encryption, according to a specific preferred embodiment of the present invention.

In particular, figure 5 shows a functional block diagram of a sending node 5 which comprises:

- a LASTER source 51 configured to provide a current LASTER;
- a local time source 52 configured to provide a current local time;
- a synchronization unit 53 that is coupled with the LASTER source 51 and the local time source 52 to acquire therefrom, respectively, the current LASTER and the current local time, and that is configured to synchronize the current local time to the current LASTER so as to provide a current sync time;
- a payload queue unit 54 configured to receive payload data to be secured according to the specific security service (for example to be encrypted), and to provide a trigger signal related to said payload data;
- an index computation unit 55 that is coupled with local time source 52, the synchronization unit 53 and the payload queue unit 54 to acquire therefrom, respectively, the current local time, the current sync time and the trigger signal, and that is configured to compute a current key validity interval index n on the basis of the current local time, of the current sync time, of the trigger signal, of a pre-defined key dwell time T, and of a starting time t_0 associated with the specific security service;
- a key generation unit 56 that is coupled with the index computation unit 55 to acquire therefrom the current key validity interval index n, and that is configured to generate a service OSK on the basis of a service WOD and a service (group) seed associated with the specific security service, and to extract a current service key K[n] from the generated service OSK on the basis of the current key validity interval index n; and
- a payload security transform unit 57 that is coupled with the payload queue unit 54 and the key generation unit 56 to acquire therefrom, respectively, current payload data to be secured according to the specific security service and the current service key K[n], and that is configured to apply to said current payload data a payload security transform based on the current service key K[n] and related to the specific security service so as to produce secured payload data (for example encrypted payload data).

In detail, the LASTER source 51 can conveniently be:

- a Global Navigation Satellite System (GNSS) terminal, such as Global Positioning System (GPS) or Galileo or GLONASS terminal, which is coupled with the sending node 5 and from which said sending node 5 acquires a current GNSS time; or
- a receiver configured to receive time-related radio signals from an atomic-clock-based radio station, and to extract from the received time-related radio signals a current exact time, such as a DCF77 receiver, or HBG receiver, or WWVB receiver; or
- a Network Time Protocol (NTP) client; or
- another global time source from which the sending node 5 can acquire a current LASTER, for example the sending node 5 could use as a LASTER a time reference that it uses to synchronize frames.

Usually, a LASTER source, such as a GPS receiver, has two outputs, namely:

- a data output conveying Global Time values in terms of UTC date and time values (i.e., YYYY/MM/DD HH/mm/ss); and
- a trigger signal that signals when last Global Time value written on data output becomes valid.

In use, a LASTER source normally writes Global Time values on data output before signalling its validity starting time by means of the trigger signal.

Preferably, the local time source 52 is an internal clock of the sending node 5, which internal clock is configured to provide a local tick time counter.

As previously described, the synchronization unit 53 synchronizes the current local time to the current LASTER in order to guarantee a minimum impact of local time drifts.

The sync time outputted by the synchronization unit 53 is a reference time expressed in internal time units synchronized/related with/to the global and exact time supplied by the LASTER source 51.

Preferably, the sync time comprises two fields:

- the local tick time counter latched at LASTER trigger (in the following denoted as SyncTime.c); and
- a LASTER global time value at LASTER trigger (in the following denoted as SyncTime.GlobalTime).

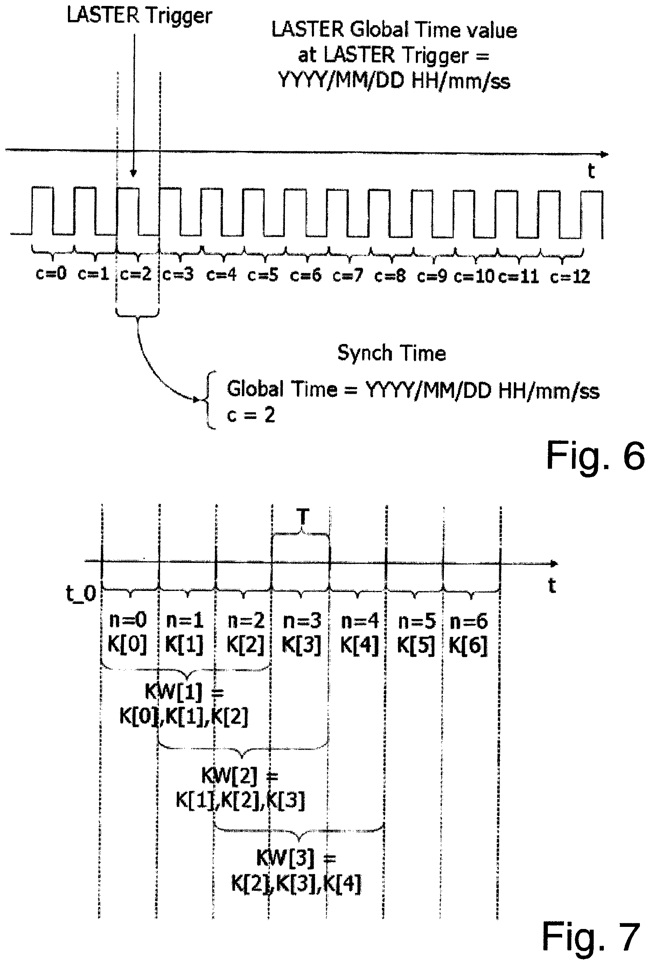

Figure 6 shows an example sync time generation performed by the synchronization unit 53.

The index computation unit 55 computes the current key validity interval index n on the basis of:

- the last received Sync Time;
- the current local tick counter;
- the starting time t_0;
- the pre-defined key dwell time T; and
- the trigger signal from the payload queue unit 54.

In an asynchronous scenario the payload queue unit 54 preferably provides the trigger signal when a new payload is ready to be transmitted.

Preferably, the index computation unit 55 latches the current local tick counter at a time of reception of the trigger signal signaling that the current payload data to be secured are available (in the following denoted as current_c), and computes the current key validity interval index n according to the following mathematical expression:

$$n = \frac{\dfrac{t\_0 - SyncTime.GlobalTime}{local\_tick\_time\_counter} + current\_c - SyncTime.c}{T}.$$

Conveniently, the key generation unit 56 is configured to generate a serviced OSK according to the first key generation process previously described in connection with figure 1, or according to the second key generation process previously described in connection with figure 2, or according to a key generation process intermediate between the first and second key generation processes.

It is important to underline the fact that the previously described specific preferred embodiment of the present invention can be implemented by an architecture different from that one of the sending node 5 previously described and shown in figure 5, provided that said different architecture is configured to carry out the previously described synchronization of a current local time to a current LASTER, the previously described computation of a current key validity interval index, and the previously described extraction of a current service key from a service OSK.

In other words, the sending node 5 can be any communication device/apparatus configured to carry out the previously described synchronization of a current local time to a current LASTER, the previously described computation of a current key validity interval index, and the previously described extraction of a current service key from a service OSK.

In particular, the sending node 5 can conveniently be a computer, a laptop, a tablet, a workstation, a smartphone, a satellite communication device, or a network apparatus, such as a router or a Base Transceiver Station (BTS), properly configured to carry out the previously described synchronization of a current local time to a current LASTER, the previously described computation of a current key validity interval index, and the previously described extraction of a current service key from a service OSK.

Moreover, the functions implemented by the sending node 5 can be advantageously used to secure data related to any layer of the Open Systems Interconnection (OSI) model.

Finally, the functions implemented by the sending node 5 can be advantageously used to provide one or more security service(s), such as encryption and/or authentication and/or integrity service(s).

As far as receivers' operation is concerned, also receiving nodes use their local time synchronized with a LASTER.

Unlike senders that use a single key for payload security transform at each key hop, receivers preferably use a key window so as to compensate clock drifts and propagation delays.

The key window, preferably, comprises at least three keys extracted from a generated service OSK. In particular, the key window slides one position on the service OSK every key dwell time T.

In some scenarios, when time information is directly delivered in data stream, the receiver can recover sender's time from data thus removing the need for a key window.

Obviously senders and receivers should use the same service OSK in order to allow the receivers to retrieve payload data from secured payload data received.

This is obtained by using same key generation function(s) GenK and same values for service WOD(s) and service (group) seed(s) in transmission and reception. Also the key dwell time T and the (security service) starting time t_0 are conveniently shared by the communication nodes for a correct synchronization.

Assuming that k is a key-window-size-related value, for key validity interval index n the key window KW[n] preferably comprises:

- some previous service keys

$$K[n-i]=GenK((n-i),WOD,seed),$$

where i is comprised in [1,k] range ;
- the current service key

$$K[n]=GenK(n,WOD,seed);$$

and
- some future service keys

$$K[n+i]=GenK((n+i),WOD,seed)$$

where i is always comprised in the [1,k] range.

Therefore, the overall key window for key validity interval n, KW[n], comprises 2k+1 service keys. Each service key in a generic KW may be conveniently identified by using the following notation: kw[n;i], with i in [-k,k] range.

Moreover, for the sake of description simplicity, the key window KW[n] can be conveniently expressed through the following formula:

$$kw[n;i]=GenK((n+i),WOD,seed),$$

where i is comprised in [-k,k] range.

Figure 7 shows an example of a key window sliding on a service OSK. In particular, in the example shown in figure 7 the key window KW includes three service keys, specifically a previous service key, a current service key and a next service key, so that there results that the key-window-size-related value k is one, i.e., k=1, and the index i is comprised in the [-1,1] range.

In detail, as shown in figure 7, at the key validity interval n=1 the key window includes

- the service key kw[1,-1]=K[0],
- the service key kw[1,0]=K[1], and
- the service key kw[1,1]=K[2];

at the key validity interval n=2 the key window includes

- the service key kw[2,-1]=K[1],
- the service key kw[2,0]=K[2], and
- the service key kw[2,1]=K[3];

at the key validity interval n=3 the key window includes

- the service key kw[3,-1]=K[2],
- the service key kw[3,0]=K[3], and
- the service key kw[3,1]=K[4];

and so on.

The receiving key window is updated on the basis of receiving node's local time synchronized with a LASTER. This synchronized time is used to retrieve the key validity interval index n as previously described for the sender.

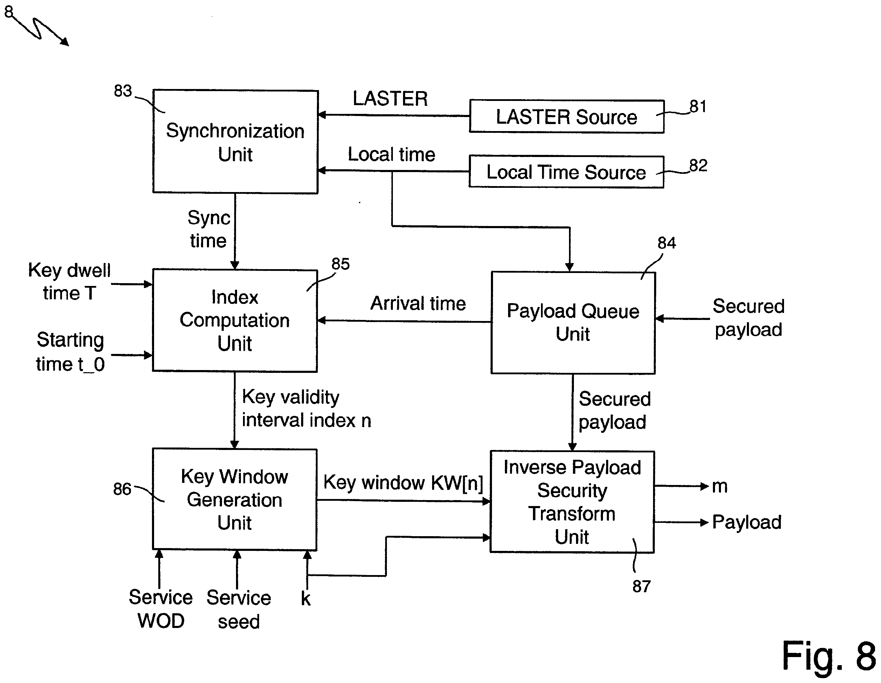

Figure 8 schematically illustrates an example of a functional architecture of a receiving node designed to apply a corresponding inverse payload security transform to secured payload data received from the sending node 5 previously described and shown in figure 5, for example to decrypt payload data encrypted and transmitted by the sending node 5.

In particular, figure 8 shows a functional block diagram of a receiving node 8 according to the specific preferred embodiment of the present invention, which receiving node 8 comprises:

- a LASTER source 81 configured to provide a current LASTER;
- a local time source 82 configured to provide a current local time;
- a synchronization unit 83 that is coupled with the LASTER source 81 and the local time source 82 to acquire therefrom, respectively, the current LASTER and the current local time, and that is configured to synchronize the current local time to the current LASTER so as to provide a current sync time;
- a payload queue unit 84 that is coupled with the local time source 82 to acquire therefrom the current local time, and that is configured to receive secured (for example encrypted) payload data arrived from the sending node 5 and to provide an arrival time reference on the basis of the current local time and of a time at which the secured payload data are received from the sending node 5;
- an index computation unit 85 that is coupled with the synchronization unit 83 and the payload queue unit 84 to acquire therefrom, respectively, the current sync time and the arrival time reference, and that is configured to compute a current key validity interval index n on the basis of the current sync time, of the arrival time reference, of the pre-defined key dwell time T (shared by the receiver 8 and the sender 5), and of the starting time t_0 (shared by the receiver 8 and the sender 5);
- a key window generation unit 86 that is coupled with the index computation unit 85 to acquire therefrom the current key validity interval index n, and that is configured to generate a service OSK on the basis of the service WOD and the service (group) seed (shared by the receiver 8 and the sender 5), and to provide a current key window KW[n] on the basis of the generated service OSK, of the current key validity interval index n, and of a pre-defined window-size-related value k; and
- an inverse payload security transform unit 87 that is coupled with the payload queue unit 84 and the key window generation unit 86 to acquire therefrom, respectively, the secured payload data and the current key window KW[n], and that is configured to apply to said secured payload data an inverse payload security transform based on the current key window KW[n] and on the pre-defined window-size-related value k so as to retrieve and output the original payload data (for example so as to decrypt the encrypted payload data received from the sender 5).

In detail, some of the functional blocks of the receiver 8 are the same as those of the sender 5.

Specifically, the synchronization unit 83 operates as the synchronization unit 53 of the sending node 5.

The LASTER source 81 of the receiving node 8, as the LASTER source 51 of the sending node 5, can conveniently be:

- a GNSS terminal; or
- a receiver configured to receive time-related radio signals from an atomic-clock-based radio station; or

- a Network Time Protocol (NTP) client; or
- another global time source form which the receiving node 8 can acquire a current LASTER, for example the receiving node 8 could use as a LASTER a time reference that it uses to synchronize frames.

Conveniently, the LASTER sources 51 and 81 can be a same type of LASTER source, or the LASTER source 81 can be different from the LASTER source 51.

Preferably, the local time source 82 is an internal clock of the receiving node 8, which internal clock is configured to provide a local tick time counter.

One of the differences between the sender 5 and the receiver 8 lies in the payload queue unit 84 which is configured to keep an internal time reference of the time at which secured payload packets are received. This internal time reference, which is called, as previously said, arrival time reference, is provided to the index computation unit 85 in order to allow said index computation unit 85 to compute the corresponding key validity interval index n for the secured payload packets received. The arrival time reference is obtained by the payload queue unit 84 by latching the local tick time counter at the time at which secured payload packets are received.

Moreover, another difference between the sender 5 and the receiver 8 lies in key generation. In fact, the key window generation unit 86 does not generate a single key for a key validity interval index n like the key generation unit 56, but, instead, generates, for each key validity interval index n, a respective whole key window comprising 2k+1 respective service keys.

As previously described, the inverse payload security transform unit 87 applies to arriving data frames the inverse payload security transform based on service keys comprised in the current key window KW[n] so as to get original payload data frames and optionally validate data integrity. Arriving data frames that cannot be correctly decrypted are discarded.

In particular, the inverse payload security transform unit 87 is preferably configured to carry out the inverse payload security transform in a variable number of steps, where the maximum number of steps is equal to the number of service keys in the key window KW, i.e., is equal to 2k+1.

At the arrival of a data frame the value of the key validity interval index n is computed on the basis of the current sync time, of the arrival time reference, of the pre-defined key dwell time T, and of the starting time $t\_0$. Then, the current key window KW[n] for said data frame is created selecting service keys from the OSK.

In detail, the current key window KW[n] includes 2k+1 service keys K[n+i], where i is comprised in [-k,k] range.

In each step j of the inverse payload security transform of a current secured payload provided by the payload queue unit 84, the inverse payload security transform unit 87 applies a respective service key kw[n;j]=K[n+j] from the current key window KW[n] to said current secured payload in the following manner:

- the current secured payload is transformed by using the inverse algorithm of the sender 5 and the respective service key kw[n;j] thereby generating a respective candidate for valid payload; and
- said respective candidate is checked by using one of the criteria described in detail in the following, and, if the check process succeeds, said respective candidate is elected as valid payload and outputted along with the successful step index j (in figure 8 said successful step index is represented by an output m of the inverse payload security transform unit 87).

In use, the inverse payload security transform unit 87 applies to the current secured payload the different service keys comprised in the current key window KW[n] until the current secured payload is correctly inversely transformed or all the service keys of the current key window KW[n] have been applied.

When the key window KW is over, the current secured payload is discarded, otherwise a successful step index m is identified.

It is important to underline the fact that the payload security transform unit 57 of the sender 5 and the inverse payload security transform unit 87 of the receiver 8 handle, respectively, the payload security transform and the inverse payload security transform related to the specific security service to be provided, for example payload data encryption/decryption. In this connection, it is important to note that the payload security transform unit 57 of the sender 5 and the inverse payload security transform unit 87 of the receiver 8 may operate differently for different application scenarios, i.e., the payload security transform and the inverse payload security transform may be different depending on the specific security service to be provided.

As far as valid payload candidate checking is concerned, in order to correctly apply a payload security transform at sender's side and the corresponding inverse payload security transform at receiver's side, some information can be conveniently introduced in the exchanged payloads so as to allow the receiver 8 to understand whether the applied inverse payload security transform based on one of the service keys in the current key window KW[n] gives the right result, i.e., whether the current secured payload is correctly inversely transformed based on one of the service keys in the current key window KW[n].

In particular, the information introduced in the exchanged payloads allows the inverse payload security transform unit 87 to correctly understand which of the services keys in the current key window KW[n] enables a correct retrieval of the original payload after applying the inverse payload security transform, i.e., allows the inverse payload security transform unit 87 to check and detect which of the valid payload candidates (each of which, as previously described, is obtained by applying to the current secured payload the inverse payload security transform based on a respective service key in the current key window KW[n]) is the actual valid payload.

The use of the information introduced in the exchanged payloads is inherently due to the fact that there is no key exchange between the sender 5 and the receiver 8.

The decision about the right key, i.e., about the actual unsecured valid payload, at the receiver's side is taken only when data are received from the sender 5. In fact, the receiver 8 cannot understand which service key from the service OSK is used by the sender 5 when no data is received by the receiver 8 from the sender 5.

In detail, the information for allowing the inverse payload security transform unit 87 to detect the actual valid payload can be conveyed in the exchanged payloads by using different approaches:

- when payloads already have a known header, this header can be checked at the receiver's side as known information;
- when the payloads already have a sequencing pattern, this pattern could be used to immediately retrieve the service key used by the sender 5; and
- new information can be added at the sender's side, said new information being divided in two subclasses, specifically

    - the new information is used to supply some other security services, such as authentication services, or
    - the new information contains a variable pattern that helps the receiver 8 to immediately retrieve the service key used by the sender 5.

Preferably, the key window KW is explored in a sequential manner. In particular, the current key window KW[n] is preferably explored by applying in each step j of the inverse payload security transform the respective service key kw[n;j]=K[n+j] from said current key window KW[n] and by changing the value of index j as follows:

$$j= 0, +1, -1, +2, -2, …, +(k-1), -(k-1), +k, -k.$$

When the inverse payload security transform is successful, the starting value of the index j used for inverse payload security transforms of subsequent payload packets received from the same source can be conveniently modified so as to compensate for propagation delay bias. For example, the starting value of the index j used for inverse payload security transforms of subsequent payload packets received from the same source can be conveniently modified on the basis the value of the index j corresponding to the last successful inverse payload security transform step. This enhancement can be conveniently applied in order to reduce needed inverse payload security transform steps for data received from the same sending source.

Moreover, the receiver can conveniently create a reception context for each sender containing respective information related to a respective estimated delay between the communication nodes, a respective size of the key window KW and, for example, also a respective state of the context. The context can be use to speed up the inverse payload security transform process.

In particular, two different states can be conveniently foreseen for the reception context, specifically:

- a searching state; and
- a tracking state.

In the searching state the receiver uses a wide key window (by selecting a big value for k) in order to compensate for, and evaluate, large propagation delays. When a match is found, i.e., when the inverse payload security transform of a received payload packet is successful, the system goes in tracking state where key window size is reduced to three elements (i.e., k=1) in order to compensate only for transmitter/receiver clock drifts.

The reception context can safely return to searching state when no data is received from the sender for a long time, or can use intermediate states between searching and tracking states by reducing the key window size when a correct estimate for delay and jitter is obtained.

Furthermore, receiving nodes that doesn't have a LASTER, can use successful step index m to compensate their clock drifts assuming that the sender has a good time reference and the propagation delay between sender and receiver is known.

It is important to underline the fact that the previously described specific preferred embodiment of the present invention can be implemented by an architecture different from that one of the receiving node 8 previously described and shown in figure 8, provided that said different architecture is configured to carry out the previously described synchronization of a current local time to a current LASTER, the previously described computation of a current key validity interval index, and the previously described generation of a current key window and the use thereof to inversely transform secured data.

In other words, the receiving node 8 can be any communication device/apparatus configured to carry out the previously described synchronization of a current local time to a current LASTER, the previously described computation of a current key validity interval index, and the previously described generation of a current key window and the use thereof to inversely transform secured data.

In particular, the receiving node 8 can conveniently be a computer, a laptop, a tablet, a workstation, a smartphone, a satellite communication device, or a network apparatus, such as a router or a Base Transceiver Station (BTS), properly configured to carry out the previously described synchronization of a current local time to a current LASTER, the previously described computation of a current key validity interval index, and the previously described generation of a current key window and the use thereof to inversely transform secured data.

Moreover, the functions implemented by the receiving node 8 can be advantageously used at any layer of the OSI model.

Finally, the functions implemented by the receiving node 8 can be advantageously used to provide one or more security service(s), such as encryption and/or authentication and/or integrity service(s).

From the foregoing, it may be immediately appreciated that the present invention allows to avoid the risk that the symmetric keys are eavesdropped because, according to the present invention, no messages are exchanged by the communication nodes in order to agree about the key to be used.

Moreover, the present invention can be conveniently used by one or more sender(s) and one or more receiver(s) and, thence, it can be advantageously exploited both in unicast and multicast scenarios, and can be advantageously used, as previously explained, at any layer of the OSI model and/or for different security services.

Furthermore, the present invention, by means of the use of the key window in reception, allows to compensate for network jitter(s) and propagation delay(s) which, in certain scenarios, such as in satellite communications, can be very high.

Finally, it is clear that numerous modifications and variants can be made to the present invention, all falling within the scope of the invention, as defined in the appended claims.

**Claims**

1. Method for securing/unsecuring data exchanged by communication nodes, the method comprising:

   • generating, by a first communication node (5) and by one or more second communication node(s) (8), one and the same ordered sequence of security keys, each of which is to be used in a respective validity time interval;
   • synchronizing, by each of the first and second communication nodes (5,8), a respective internal time reference to a global time reference thereby obtaining a respective sync time reference;
   • extracting, by the first communication node (5), a security key from said one and the same ordered sequence of security keys on the basis of the respective sync time reference;
   • securing, by the first communication node (5), data to be sent to the second communication node(s) (8) on the basis of the extracted security key;
   • extracting, by each second communication node (8), a respective ordered group of security keys from said one and the same ordered sequence of security keys on the basis of the respective sync time reference; and
   • unsecuring, by each second communication node (8), the secured data received from the first communication node (5) on the basis of the respective ordered group of security keys extracted;

   the method being **characterized in that** each second communication node (8):

   • tries unsecuring the secured data received from the first communication node (5) by

      - following a respective given sequence of unsecuring attempts, each of which is based on a corresponding security key included in the respective ordered group of security keys extracted, and
      - starting with an unsecuring attempt based on a security key that is in a respective starting position in the respective ordered group of security keys extracted;

   • modifies the respective starting position so as to compensate for a respective propagation delay estimated for previous secured data sent by the first communication node (5) and received by said second communication node (8); and
   • determines, on the basis of said respective propagation delay, a respective number of security keys to be included in the respective ordered group of security keys to be extracted.

2. The method of claim 1, wherein:

   • the first communication node (5) extracts the security key from said one and the same ordered sequence of security keys also on the basis of a given starting time and a given duration of the validity time intervals; and
   • each second communication node (8) extracts the respective ordered group of security keys from said one and the same ordered sequence of security keys also on the basis of said given starting time and said given duration of the validity time intervals.

3. The method of claim 2, further comprising exchanging, between the first communication node (5) and each second communication node (8), said given starting time and said given duration of the validity time intervals.

4. The method according to any preceding claim, wherein the first communication node (5) extracts the security key from said one and the same ordered sequence of security keys on the basis of the respective internal time reference latched at a time at which the data to be sent to the second communication node(s) (8) are available.

5. The method according to any preceding claim, wherein each second communication node (8) extracts the respective ordered group of security keys from said one and the same ordered sequence of security keys on the basis of the respective internal time reference latched at a respective time at which the secured data are received from the first communication node (5).

6. The method according to any preceding claim, wherein each second communication node (8) determines the respective starting position on the basis of a position of a security key that:

   • was included in a respective ordered group of security keys previously extracted from said one and the same ordered sequence of security keys; and
   • caused secured data previously received from the first communication node (5) to be successfully unsecured.

7. The method according to any preceding claim, further comprising acquiring, by each of the first and second communication nodes (5,8), the global time reference from a respective global time source that is comprised in the set consisting of: a Global Navigation Satellite System terminal, a receiver configured to receive time-related radio signals from an atomic-clock-based radio station, and a Network Time Protocol (NTP) client.

8. The method according to any preceding claim, wherein said one and the same ordered sequence of security keys is generated by the first and second communication nodes (5,8) on the basis of one and the same given word of day and one and the same given seed.

9. The method of claim 8, further comprising exchanging, between the first communication node (5) and each second communication node (8), said one and the same given word of day and/or said one and the same given seed.

10. The method according to any preceding claim, wherein said one and the same ordered sequence of security keys is generated by the first and second communication nodes (5,8) by applying, to one and the same ordered sequence of random numbers, one and the same security transform based on one and the same given word of day.

11. The method of claim 10, wherein said one and the same security transform is implemented by the first and second communication nodes (5,8) in Cipher Block Chaining mode.

12. The method according to claim 10 or 11, wherein the first and second communication nodes (5,8) either generate said one and the same ordered sequence of random numbers by operating as pseudo random number generators based on one and the same given seed, or retrieve said one and the same ordered sequence of random numbers from stored ordered sequences of random numbers.

13. Communication apparatus (5,8) configured to carry out the method claimed in any preceding claim.

14. Software program product comprising software code portions which are:

   • storable on, and executable by, a communication apparatus; and
   • such that to cause, when stored, said communication apparatus to become configured to carry out the method claimed in any claim 1-12.

**Patentansprüche**

1. Verfahren zur Sicherung/Entsicherung des Datenaustauschs über Kommunikationsknoten, wobei das Verfahren aufweist:

   - Erzeugen ein und derselben sortierten Sequenz von Sicherheitsschlüsseln, von denen jeder in einem jeweiligen Gültigkeitszeitintervall verwendet werden soll, durch einen ersten Kommunikationsknoten (5) und durch einen oder mehrere zweite Kommunikationsknoten (8);

- Synchronisieren einer jeweiligen internen Zeitreferenz mit einer globalen Zeitreferenz durch jeden der ersten und zweiten Kommunikationsknoten (5, 8), um eine globale Zeitreferenz zu erhalten, wodurch eine jeweilige Synchronisationszeitreferenz erhalten wird;

- Extrahieren eines Sicherheitsschlüssels aus der ein und derselben sortierten Sequenz von Sicherheitsschlüsseln durch den ersten Kommunikationsknoten (5) auf der Basis der jeweiligen Synchronisationszeitreferenz;

- Sichern von Daten, die an den/die zweiten Kommunikationsknoten (8) gesendet werden sollen, durch den ersten Kommunikationsknoten (5) auf der Basis des extrahierten Sicherheitsschlüssels;

- Extrahieren einer jeweiligen sortierten Gruppe von Sicherheitsschlüsseln aus der ein und derselben sortierten Sequenz von Sicherheitsschlüsseln durch den zweiten Kommunikationsknoten (8) auf der Basis der jeweiligen Synchronisationszeitreferenz; und

- Entsichern der gesicherten Daten, die von dem ersten Kommunikationsknoten (5) empfangen werden, durch jeden zweiten Kommunikationsknoten (8) auf der Basis der jeweiligen sortierten Gruppe von Sicherheitsschlüsseln, die extrahiert wurden;

wobei das Verfahren **dadurch gekennzeichnet ist, dass** jeder zweite Kommunikationsknoten (8):

- versucht, die gesicherten Daten, die von dem ersten Kommunikationsknoten (5) empfangen werden, zu entsichern, durch:

-- Folgen einer jeweiligen gegebenen Sequenz von Entsicherungsversuchen, von denen jeder auf einem entsprechenden Sicherheitsschlüssel basiert, der in der jeweiligen sortierten Gruppe von extrahierten Sicherheitsschlüsseln enthalten ist, und

-- Beginnen mit einem Entsicherungsversuch basierend auf einem Sicherheitsschlüssel, der in einer jeweiligen Startposition in der jeweiligen sortierten Gruppe von extrahierten Sicherheitsschlüsseln ist;

- die jeweilige Startposition modifiziert, um eine jeweilige Ausbreitungsverzögerung, die für frühere gesicherte Daten geschätzt wird, die von dem ersten Kommunikationsknoten (5) gesendet und von dem zweiten Kommunikationsknoten (8) empfangen wurden, zu kompensieren; und

- auf der Basis der jeweiligen Ausbreitungsverzögerung eine jeweilige Anzahl von Sicherheitsschlüsseln bestimmt, die in der jeweiligen sortierten Gruppe von Sicherheitsschlüsseln enthalten ist, die extrahiert werden soll.

2.  Verfahren nach Anspruch 1, wobei:

- der erste Kommunikationsknoten (5) den Sicherheitsschlüssel aus der ein und derselben sortierten Sequenz von Sicherheitsschlüsseln auch auf der Basis einer gegebenen Startzeit und einer gegebenen Dauer der Gültigkeitszeitintervalle extrahiert; und

- jeder zweite Kommunikationsknoten (8) die jeweiliges sortierte Gruppe von Sicherheitsschlüsseln aus der ein und derselben sortierten Sequenz von Sicherheitsschlüsseln auch auf der Basis der gegebenen Startzeit und der gegebenen Dauer der Gültigkeitszeitintervalle extrahiert.

3.  Verfahren nach Anspruch 2, das ferner den Austausch der gegebenen Startzeit und der gegebenen Dauer der Gültigkeitszeitintervalle zwischen dem ersten Kommunikationsknoten (5) und jedem zweiten Kommunikationsknoten (8) aufweist.

4.  Verfahren nach jedem vorhergehenden Anspruch, wobei der erste Kommunikationsknoten (5) den Sicherheitsschlüssel aus der ein und derselben Sequenz von Sicherheitsschlüsseln auf der Basis der jeweiligen internen Zeitreferenz, die mit einer Zeit verriegelt ist, zu der die Daten, die an den/die zweiten Kommunikationsknoten (8) gesendet werden sollen, verfügbar sind, extrahiert.

5.  Verfahren nach jedem vorhergehenden Anspruch, wobei jeder zweite Kommunikationsknoten (8) die jeweilige sortierte Gruppe von Sicherheitsschlüsseln aus der ein und derselben Sequenz von Sicherheitsschlüsseln auf der Basis der jeweiligen internen Zeitreferenz, die mit einer jeweiligen Zeit verriegelt ist, zu der die gesicherten Daten von dem ersten Kommunikationsknoten (5) empfangen werden, extrahiert.

6.  Verfahren nach jedem vorhergehenden Anspruch, wobei jeder zweite Kommunikationsknoten (8) die jeweilige Startposition auf der Basis einer Position eines Sicherheitsschlüssels bestimmt, der:

- in einer jeweiligen sortierten Gruppe von Sicherheitsschlüsseln enthalten war, die vorher aus der ein und derselben sortierten Sequenz von Sicherheitsschlüsseln extrahiert wurde; und
- bewirkte, dass gesicherte Daten, die vorher von dem ersten Kommunikationsknoten (5) empfangen wurden, erfolgreich entsichert wurden.

7. Verfahren nach jedem vorhergehenden Anspruch, das ferner das Erlangen der globalen Zeitreferenz von einer jeweiligen globalen Zeitquelle, die in einem der folgenden enthalten ist, durch jeden der ersten und zweiten Kommunikationsknoten (5, 8) aufweist: einem globalen Navigationssatellitensystem-Endgerät, einem Empfänger, der konfiguriert ist, um zeitbezogene Funksignale von einer atomuhrbasierten Funkstation zu empfangen, und einem Netzwerkzeitprotokoll- (NTP-) Client.

8. Verfahren nach jedem vorhergehenden Anspruch, wobei die ein und dieselbe sortierte Sequenz von Sicherheitsschlüsseln durch die ersten und zweiten Kommunikationsknoten (5, 8) auf der Basis ein und desselben gegebenen Worts des Tages und dem gleichen gegebenen Seed erzeugt wird.

9. Verfahren nach Anspruch 8, das ferner den Austausch des ein und desselben Worts des Tages und/oder des gleichen gegebenen Seed zwischen dem ersten Kommunikationsknoten (5) und dem zweiten Kommunikationsknoten (8) aufweist.

10. Verfahren nach jedem vorhergehenden Anspruch, wobei die ein und dieselbe sortierte Sequenz von Sicherheitsschlüsseln durch die ersten und zweiten Kommunikationsknoten (5, 8) erzeugt wird, indem auf ein und dieselbe sortierte Sequenz von Zufallszahlen ein und dieselbe Sicherheitstransformation basierend auf ein und demselben gegebenen Wort des Tages angewendet wird.

11. Verfahren nach Anspruch 10, wobei die ein und dieselbe Sicherheitstransformation durch die ersten und zweiten Kommunikationsknoten (5, 8) in der Chiffrierblockverkettungsbetriebsart (CBC) implementiert wird.

12. Verfahren nach Anspruch 10 oder 11, wobei die ersten und zweiten Kommunikationsknoten (5, 8) entweder die ein und dieselbe Sequenz von Zufallszahlen erzeugen, indem sie als Pseudozufallszahlengeneratoren basierend auf ein und demselben gegebenen Seed arbeiten, oder die ein und dieselbe sortierte Sequenz von Zufallszahlen aus gespeicherten sortierten Sequenzen von Zufallszahlen abrufen.

13. Kommunikationsvorrichtung (5, 8), die konfiguriert ist, um das Verfahren, das in jedem vorhergehenden Anspruch beansprucht wird, auszuführen.

14. Softwareprogrammprodukt, das Softwarecodeabschnitte aufweist, die:

- auf einer Kommunikationsvorrichtung speicherbar und durch diese ausführbar sind; und
- wenn es gespeichert ist, bewirkt, dass die Kommunikationsvorrichtung konfiguriert wird, um das in jedem Anspruch 1 - 12 beanspruchte Verfahren auszuführen.

**Revendications**

1. Procédé pour sécuriser/désécuriser des données échangées par des noeuds de communication, le procédé comprenant :

• la génération, par un premier noeud de communication (5) et par un ou plusieurs deuxième(s) noeud(s) de communication (8), une seule et même séquence ordonnée de clés de sécurité, chacune d'elles étant à utiliser dans un intervalle de temps de validité respectif ;
• la synchronisation, par chacun des premier et deuxièmes noeuds de communication (5, 8), d'une référence de temps interne respective sur une référence de temps global obtenant ainsi une référence de temps de synchronisation respective ;
• l'extraction, par le premier noeud de communication (5), d'une clé de sécurité de ladite une seule et même séquence ordonnée de clés de sécurité sur la base de la référence de temps de synchronisation respective ;
• la sécurisation, par le premier noeud de communication (5), de données à envoyer au(x) deuxième(s) noeud(s) de communication (8) sur la base de la clé de sécurité extraite ;
• l'extraction, par chaque deuxième noeud de communication (8), d'un groupe ordonné respectif de clés de sécurité de ladite une seule et même séquence ordonnée de clés de sécurité sur la base de la référence de temps de synchronisation respective ; et
• la désécurisation, par chaque deuxième noeud de communication (8), des données sécurisées reçus en provenance du premier noeud de communication (5) sur la base du groupe ordonné respectif de clés de sécurité extraites ;

le procédé étant **caractérisé en ce que** chaque deuxième noeud de communication (8) :

• essaie de désécuriser les données sécurisées reçues en provenance du premier noeud de communication (5) en

- suivant une séquence donnée respective de tentatives de désécurisation, chacune d'elles étant basée sur une clé de sécurité correspondante incluse dans le groupe ordonné respectif de clés de sécurité extraites, et
- démarrant avec une tentative de désécurisation sur la base d'une clé de sécurité qui se trouve dans une position de démarrage respective dans le groupe ordonné respectif de clés de sécurité extraites ;

• modifie la position de démarrage respective de manière à compenser un délai de propagation respectif estimé pour de précédentes données sécurisées envoyées par le premier noeud de communication (5) et reçues par ledit deuxième noeud de communication (8) ; et
• détermine, sur la base dudit délai de propagation respectif, un nombre respectif de clés de sécurité à inclure dans le groupe ordonné respectif de clés de sécurité à extraire.

2. Procédé selon la revendication 1, dans lequel :

• le premier noeud de communication (5) extrait la clé de sécurité de ladite une seule et même séquence ordonnée de clés de sécurité également sur la base d'un temps de démarrage donné et d'une durée donnée des intervalles de temps de validité ; et
• chaque deuxième noeud de communication (8) extrait le groupe ordonné respectif de clés de sécurité de ladite une seule et même séquence ordonnée de clés de sécurité également sur la base dudit temps de démarrage donné et de ladite durée donnée des intervalles de temps de validité.

3. Procédé selon la revendication 2, comprenant en outre l'échange, entre le premier noeud de communication (5) et chaque deuxième noeud de communication (8), dudit temps de démarrage donné et de ladite durée donnée des intervalles de temps de validité.

4. Procédé selon une quelconque revendication précédente, dans lequel le premier noeud de communication (5) extrait la clé de sécurité de ladite une seule et même séquence ordonnée de clés de sécurité sur la base de la référence de temps interne respective enclenchée à un moment où les données à envoyer au(x) deuxième(s) noeud(s) de communication (8) sont disponibles.

5. Procédé selon une quelconque revendication précédente, dans lequel chaque deuxième noeud de communication (8) extrait le groupe ordonné respectif de clés de sécurité de ladite une seule et même séquence ordonnée de clés de sécurité sur la base de la référence de temps interne respective enclenchée à un moment respectif où les données sécurisées sont reçues en provenance du premier noeud de communication (5).

6. Procédé selon une quelconque revendication précédente, dans lequel chaque deuxième noeud de communication (8) détermine la position de démarrage respective sur la base d'une position d'une clé de sécurité qui :

• était incluse dans un groupe ordonné respectif de clés de sécurité préalablement extraites de ladite une seule et même séquence ordonnée de clés de sécurité ; et
• a amené des données sécurisées préalablement reçues en provenance du premier noeud de communication (5) à être désécurisées avec succès.

7. Procédé selon une quelconque revendication précédente, comprenant en outre l'acquisition, par chacun des premier et deuxièmes noeuds de communication (5, 8), de la référence de temps global à partir d'une source de temps global respective qui est comprise dans l'ensemble constitué : d'un terminal de système mondial de navigation par satellites, d'un récepteur configuré pour recevoir des signaux radio liés au temps provenant d'une station radio basée sur une horloge atomique, et d'un client de protocole de synchronisation de réseau (NTP).

8. Procédé selon une quelconque revendication précédente, dans lequel ladite une seule et même séquence ordonnée de clés de sécurité est générée par les premier et deuxièmes noeuds de communication (5, 8) sur la base d'un seul et même mot du jour donné et d'une seule et même semence donnée.

9. Procédé selon la revendication 8, comprenant en outre l'échange, entre le premier noeud de communication (5) et chaque deuxième noeud de communication (8), dudit un seul et même mot du jour donné et/ou de ladite une seule et même semence donnée.

10. Procédé selon une quelconque revendication précédente, dans lequel ladite une seule et même séquence ordonnée de clés de sécurité est générée par les premier et deuxièmes noeuds de communication (5, 8) en appliquant, à une seule et même séquence ordonnée de nombres aléatoires, une seule et même transformation de sécurité sur la base d'un seul et même mot du jour donné.

11. Procédé selon la revendication 10, dans lequel ladite une seule et même transformation de sécurité est mise en oeuvre par les premier et deuxièmes noeuds de communication (5, 8) dans un mode enchaînement de blocs de chiffrement.

12. Procédé selon la revendication 10 ou 11, dans lequel les premier et deuxièmes noeuds de communication (5, 8) soit génèrent ladite une seule et même séquence ordonnée de nombres aléatoires en fonctionnant comme des générateurs de nombres pseudo-aléatoires sur la base d'une seule et même semence donnée, soit extraient ladite une seule et même séquence ordonnée de nombres aléatoires de séquences ordonnées de nombres aléatoires stockées.

13. Appareil de communication (5, 8) configuré pour réaliser le procédé revendiqué dans une quelconque revendication précédente.

14. Produit de programme logiciel comprenant des parties de code de logiciel qui sont :

   • stockables sur, et exécutables par, un appareil de communication ; et
   • de manière à amener, quand elles sont stockées, ledit appareil de communication à devenir configuré pour réaliser le procédé revendiqué dans une quelconque revendication 1-12.

Fig. 1

EP 2 748 966 B1

Fig. 2

EP 2 748 966 B1

T

t_0

n=0  n=1  n=2  n=3  n=4  n=5  n=6
K[0]  K[1]  K[2]  K[3]  K[4]  K[5]  K[6]

t

Fig. 3

t

tick_time

Local Time Source

T = 5 x tick_time       T = 5 x tick_time
n = i, K[i]             n = i+1, K[i+1]

Fig. 4

Fig. 5

EP 2 748 966 B1

**Fig. 6**

**Fig. 7**

Fig. 8

**EP 2 748 966 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0163832 A1
- WO 0191366 A2